# EUROPÄISCHE PATENTSCHRIFT

(11) **EP 0 834 682 B1**
(45) Veröffentlichungstag und Bekanntmachung des Hinweises auf die Patenterteilung: **09.01.2002**
(21) Anmeldenummer: 97114357.3
(22) Anmeldetag: 20.08.1997
(51) Int. Cl.: F16H 61/06

(54) **Verfahren zur Steuerung des Schaltvorganges eines automatischen Fahrzeuggetriebes und Steuervorrichtung**
Method for controlling gear shifts in an automatic transmission of a vehicle and control unit therefor
Méthode de commande de changement de vitesses d'une transmission automatique de véhicule et dispositif de commande à cet effet

(30) Priorität: 18.09.1996 DE 19638077
(43) Veröffentlichungstag der Anmeldung: 08.04.1998
(73) Patentinhaber: Voith Turbo GmbH & Co. KG, 89522 Heidenheim (DE)
(72) Erfinder: Rotter, Erwin, 89564 Nattheim (DE); Schönhaar, Thomas, 89511 Königsbronn (DE); Maier, Wilfried, 89518 Heidenheim (DE); Häberle, Friedrich, 89518 Heidenheim (DE); Depping, Herbert, 89537 Giengen (DE)
(74) Vertreter: Dr. Weitzel & Partner

(56) Entgegenhaltungen:
- EP-A- 0 176 750
- EP-A- 0 414 547
- EP-A- 0 780 602
- WO-A-97/08479
- US-A- 5 213 013
- US-A- 5 301 572
- PATENT ABSTRACTS OF JAPAN vol. 016, no. 331 (M-1282), 20. Juli 1992 & JP 04 095658 A (MAZDA MOTOR), 27. März 1992

## Beschreibung

Die Erfindung betrifft ein Verfahren zur Steuerung des Schaltvorganges eines automatischen Fahrzeuggetriebes, im einzelnen mit den Merkmalen aus dem Oberbegriff des Anspruchs 1, desweiteren eine Steuervorrichtung, im einzelnen mit den Merkmalen aus dem Oberbegriff des Anspruches 16.

Verfahren zum Betreiben bzw. zur Steuerung von automatischen Fahrzeuggetrieben sind bereits aus den folgenden Druckschriften bekannt:
(1) DE 19 32 986 C3
(2) DE 32 05 767 C2
(3) EP 0 176 750 B2
(4) EP 0 435 372 B1
(5) DE 30 25 054 A1

Es ist bekannt, bei automatischen Fahrzeuggetrieben den Druck des Arbeitsmediums, welches zur Betätigung der Reibelemente des Getriebes dient, in Abhängigkeit von verschiedenen Betriebsparametern des Kraftfahrzeuges einzustellen. Bei dem in der DE 19 32 986 C3 offenbarten Verfahren erfolgt dabei die Druckeinstellung über eine elektronische Steuerung über vorgegebene Druckkennlinien. Ein Ausgleich von Parameteränderungen infolge von Serienstreuungen oder Alterungseffekten kann dadurch nicht erreicht werden. Reibwerte von Lamellen, Kennlinien von Druckreglern oder Federn sowie das vom Motor abgegebene Moment sind jedoch diesen Streuungen ständig unterworfen, wodurch einerseits Schaltqualitätsschwankungen hervorgerufen werden, andererseits jedoch hohe Anforderungen an die Toleranzen der eingesetzten bzw. verwendeten Teile gestellt werden. Dies wirkt sich kostenmäßig sehr ungünstig aus.

Bei der in DE 32 05 767 C2 offenbarten Ausführung wurden deshalb geschlossene Regelkreise verwendet. Diese besitzen jedoch den Nachteil, daß eine der notwendigen Dynamik Rechnung tragende Regelgröße erforderlich ist. Grundsätzlich sind bei der Regelstrecke Motor-Getriebe infolge der vorhandenen Totzeiten im gesamten Betriebsstrang Stabilitätsprobleme zu erwarten, und es müssen deshalb deutliche Regelabweichungen in Kauf genommen werden, bevor die Regelung korrigierend eingreifen kann, was sich in einem schlechten Schaltkomfort niederschlägt.

Aus der DE 30 25 054 A1 ist ein Druckregler für eine automatische Getriebesteuerung für Fahrzeuge bekannt, bei der für den Gangwechsel in Abhängigkeit von der Last eine gewünschte Schaltzeit abgelegt ist. Die tatsächlich auftretende Schaltzeit wird gemessen und mit der gespeicherten Sollschaltzeit verglichen. Treten hierbei Abweichungen auf, wird in einem Korrekturregister ein Korrekturwert abgelegt, welcher bei einem Gangwechsel den Druckkennlinien, welche ursprünglich in einem Speicher abgelegt sind und dazu dienen, den Druck während des Gangwechsels zu steuern, hinzugefügt wird.

Bei einem gattungs gemäßen Verfahren zur elektronischen Steuerung eines automatischen Fahrzeuggetriebes, wie in der EP 0 176 750 B2 beschrieben, werden Korrekturwerte in Abhängigkeit der Last und Drehzahl errechnet und abgelegt, so daß eine exakte Anpassung an verschiedene Lastdrehzahlverhältnisse erfolgen kann. Die Soll- und die Istwerte für die charakterisierende Größe sowie die gebildeten Korrekturwerte werden in Lastdrehzahlkennfelder abgelegt, wobei die Istwerte durch Mittelwertbildung von Einzelwerten aus mehreren Schaltvorgängen gebildet werden, so daß bis zum Abschluß der Mittelwertbildung der vorherige Korrekturwert erhalten bleibt und nach Durchführung der Korrektur die Istwerte für die Mittelwertbildung bei Veränderung des Korrekturwertes auf die Sollwerte gesetzt werden.

In der EP 0 435 372 B1 ist ein Verfahren zur Steuerung des Wechsels in einem Automatikgetriebe eines Fahrzeugs von einer verringert Drehmoment übertragenden fluiddruckbetriebenen Drehmomentenübertragungsvorrichtung beschrieben, welche einem niedrigeren Geschwindigkeitsverhältnis zugeordnet ist, zu einer zunehmend Drehmoment übertragenden fluiddruckbetriebenen Drehmomentübertragungseinrichtung, die einem höheren Geschwindigkeitsverhältnis zugeordnet ist, wenn die Motordrossel im wesentlichen geschlossen ist. Die abgehende Drehmomentübertragungsvorrichtung wird dabei gleichzeitig bzw. im wesentlichen gleichzeitig mit dem Eingriff der aufkommenden Drehmomentübertragungsvorrichtung außer Eingriff gebracht. Das Getriebe weist einen Eingang, einen Ausgang und eine Turbine auf, welche über den Eingang mit der Antriebsmaschine gekoppelt ist. Das in dieser Druckschrift beschriebene Verfahren umfaßt dabei die nachfolgend genannten Schritte. Der Fülldruck wird an die aufkommende Drehmomentenübertragungsvorrichtung für eine Füllzeit angelegt, um im wesentlichen die aufkommende Drehmomentübertragungsvorrichtung mit Betriebsfluid zu füllen. Das Turbinengeschwindigkeitshochziehen aufgrund eines anfänglichen Schlupfes der verringert Drehmoment übertragenden Drehmomentübertragungsvorrichtung wird nachgewiesen und eine Synchronisation der aufkommenden Drehmomentübetragungsvorrichtung auf der Grundlage der Turbinengeschwindigkeit und der Ausgangsgeschwindigkeit festgestellt und der Wechsel dann vollendet, wenn eine Synchronisation nachgewiesen wird. Dabei wird an die abgehende Drehmomentübertragungsvorrichtung für eine Zeit geringer als die Füllzeit ein niedrigerer Druck angelegt und dann die abgehende Drehmomentübertragungseinrichtung von Betriebsfluid entleert. Wenn ein Turbinengeschwindigkeitshochziehen nachgewiesen wird, erfolgt ein Durchlaufen einer Steuerschleife. Bei diesem Durchlauf wird dabei ein Schlupfprofil erstellt, welches den erwünschten Schlupf während des Durchlaufs repräsentiert. Der Schlupf der aufkommenden Drehmomentübertragungsvorrichtung wird gemessen und gesteuert, um den Schlupf der aufkommenden Drehmomentübertragungsvorrichtung auf der Grundlage des Schlupfgeschwindigkeitsprofils zu steuern.

Es ist bekannt, bei all diesen Ausführungen der Beeinflussung der Schaltverläufe insbesondere der Schaltzeiten durch Beeinflussung des Steuerdruckes zur Beaufschlagung beispielsweise der Lamellen diesen adaptiv an die konkreten Gegebenheiten anzupassen und einzustellen. Bei Automatgetrieben werden trotz Beeinflussung des Steuer- bzw. Regeldruckes in Abhängigkeit von den ermittelten Fahrkennwerten hinsichtlich der Qualität nur zum Teil befriedigende Schaltergebnisse erzielt, die vereinzelt bei Schaltungen auftreten.

Der Erfindung liegt deshalb die Aufgabe zugrunde, ein Verfahren zur Steuerung des Schaltvorganges eines automatischen Fahrzeuggetriebes und des weiteren eine Steuervorrichtung zur Durchführung des Verfahrens derart weiterzuentwickeln, daß die genannten Nachteile vermieden werden. Insbesondere sind die zeitweise sich einstellenden unbefriedigenden Schaltverläufe mit einfachen Mitteln und geringem konstruktiven Aufwand zu korrigieren. Im einzelnen soll ein Ausgleich von Parameteränderungen in Folge von Serienstreuungen oder Alterungseffekten, beispielsweise der Reibwerte von Lamellen, der Kennlinien von Druckreglern oder Federn sowie des vom Motor abgegebenen Momentes erzielt werden. Störgrößen, die eine deutliche Regelabweichung herbeiführen, was sich in einem schlechtem Schaltkomfort niederschlägt, sind zu vermeiden. Die Aufgabe besteht des weiteren darin, die adaptive Anpassung der Schaltverläufe, insbesondere der Schaltzeiten durch Beeinflussung des Steuerdruckes zur Beaufschlagung beispielsweise der Lamellen, und die dabei auftretenden unbefriedigenden Schaltergebnisse derart zu verbessern, daß der Schaltkomfort gesteigert werden kann.

Die erfindungsgemäße Lösung der Aufgabe ist durch die Merkmale des Anspruchs 1 charakterisiert. Die vorrichtungsgemäße Umsetzung ist in Anspruch 16 wiedergegeben. Vorteilhafte Ausführungen sind in den Unteransprüchen beschrieben.

Erfindungsgemäß wird eine, charakteristische Druckwerte - den Anfangsdruck oder beispielsweise den Regeldruck - adaptiv beeinflussende Steuerung mit einer dieser überlagerten Regelung kombiniert. Der Erfinder hat erkannt, daß das zum Teil sehr unbefriedigende Schaltverhalten einzelner Schaltvorgänge aufgrund von Störungen durch äußere Einflüsse, beispielsweise durch Reibung und auch dynamische Vorgänge im Antriebsstrang bei geringeren Drücken bedingt werden. Dies hat zur Folge, daß die zu synchronisierenden Drehzahlen, d.h. die am Getriebeeingang bzw. an der Primärsseite der Kupplung anliegende Eingangsdrehzahl, welche nachfolgend als Antriebsdrehzahl bezeichnet wird und welche meist die Motordrehzahl oder eine der Motordrehzahl proportionale Drehzahl ist, langsamer an die an der Sekundärseite der Kupplung anliegende Ausgangsdrehzahl, die als Abtriebsdrehzahl bezeichnet wird, angepaßt wird und die Synchrondrehzahl zu einem späteren Zeitpunkt erzielt wird. Der gesamte Schaltvorgang verlängert sich.

Die der Adaption überlagerte Regelung bewirkt eine Anpassung der Beschleunigung der zu synchronisierenden Drehzahl auf der Antriebsseite an einen Sollwert durch Ansteuerung eines Stellgliedes, welches den Steuerdruck für die Betätigung der Kupplungsteile erzeugt. Die abweichend von der adaptierten Kennlinie für den Steuerdruckverlauf erfolgende Erhöhung oder Verringerung des Steuerdruckes bewirkt eine schnelle Anpassung der zu synchronisierenden Drehzahl. Der Steuerdruck- Anfangssteuerdruck oder Regeldruck- wird dabei um einen bestimmten Wert erhöht. Der Steuerdruckkennlinienverlauf mit der überlagerten Regelung wird dann dem bei adaptiver Beeinflussung nachgebildet, jedoch mit höheren Druckwerten.

Die überlagerte Regelung wird in der Regel erst aktiv, wenn die Möglichkeiten der Adaption ausgeschöpft sind, d.h. wenn bereits adaptiv die für einzelne Schaltvorgänge optimalen Steuerdruckverläufe ermittelt und eingestellt wurden oder die weitere adaptive Änderung der Steuerdruckverläufe keine optimalen Schaltverläufe bezüglich der zu erzielenden Zeiten mehr gewährleisten würde.

Es sind auch Fälle denkbar, in denen die überlagerte Regelung bereits vorher aktiviert wird. Beispielsweise dann, wenn in der Zeitdauer TMAX (maximale Schaltdauer) eine Synchronisierung nicht möglich ist.

Die Regelung verarbeitet im wesentlichen wenigstens zwei Größen - einen aktuellen Istwert einer die Beschleunigung der zu synchronisierenden Drehzahl wenigstens mittelbar charakterisierende Größe und einen Sollwert dieser Größe, welche vorzugsweise die Antriebsdrehzahl selbst ist, wobei die Beschleunigung über die Zeit aus der Drehzahl ermittelt werden kann. Ausgangsgröße der Reglung ist eine Änderung des die Lamellen der Kupplung beaufschlagenden Steuerdruckes. Als Stellglied fungiert eine Steuerdruckerzeugungseinheit. Innerhalb der Regelstrecke erfolgt ein ständiger Vergleich der aktuell ermittelten Istbeschleunigung der Antriebsdrehzahl bzw. der Antriebsdrehzahl selbst mit einem theoretisch bei entsprechendem Steuerdruckverlauf ermittelten Antriebsdrehzahlverlauf. Dieser kann für einzelne Schaltvorgänge bereits festgelegt und abgespeichert sein oder aber er wird während des Schaltvorgangs berechnet.

Bei Abweichung wird ein Stellsignal zur Steuerdruckbeeinflussung, insbesondere zur Erhöhung ausgegeben. Vorzugsweise erfolgt diese Erhöhung um einen festleg- oder vorgebbaren Erhöhungswert. Dieser festleg- oder vorgebbare Erhöhungswert kann ebenfalls bereits als fester Wert abgespeichert sein oder als veränderliche Größe.

Vorrichtungsmäßig weist die Getriebesteuerung dazu eine Steuervorrichtung auf, die neben der Steuereinrichtung zur Adaption eine Regeleinrichtung umfaßt, vorzugsweise in Form einer elektronischen Steuer- und Regeleinheit. In diese ist ein Vergleicher integriert. Der Vergleicher kann durch in der Steuer- und Regeleinheit ablaufende Routinen realisiert werden. Vom Vergleicher werden beispielsweise dort abgelegte Sollwerte in Form von Kennlinien für theoretische Antriebsdrehzahlverläufe während eines Schaltvorganges mit den tatsächlichen verglichen. Der Vergleich kann sich auch auf einen vorgebbaren Sollwertbereich erstrecken. Eine andere Möglichkeit besteht darin, den Sollmotordrehzahlverlauf bzw. die Motorbeschleunigung, d.h. die Beschleunigung der durch Synchronisation zu erzielende Drehzahl, aus der noch verbleibenden Schaltzeit zu berechnen. Die Schaltzeit ist dabei durch die maximale Belastung der Lamellen gegeben.

Bei der Adaption kann es sich beispielsweise um eine aus dem Stand der Technik bekannte und eingangs kurz erläuterte Regeldruckwertadaption oder aber eine sogenannte Anfangsdruckwertadaption handeln. Bei der Anfangsdruckwertadaption wird bei Nichteinhaltung einer bestimmten vorgebbaren Zeit für den Beginn des Synchronisiervorganges oder einer definierten Motordrehzahländerung der Anfangsdruckwert zum Aufbringen der erforderlichen Anpreßkraft der kraftschlüssig miteinander koppelbaren Kupplungsteile adaptiert. Bei diesen, in der Regel mechanisch übertragenden, asynchron schaltbaren Kupplungen sind mindestens zwei Reibflächen gegeneinander gepreßt, wodurch eine zur Drehmomentübertragung erforderliche Reibung entsteht. Für die Reibflächen selbst kommen dabei verschiedene geometrische Grundformen in Betracht, beispielsweise Reibscheiben-, Kegel- und Trommelkupplungen oder aber bei Parallelschaltung mehrerer Reibkörper, beispielsweise der Lamellenkupplung, zur Anwendung. Das bei diesen kraftschlüssig arbeitenden Kupplungen durch die Reibung übertragbare Drehmoment hängt dabei im wesentlichen neben der Anpreßkraft von der Reibungszahl sowie der Anzahl der Reibflächenpaare ab. Beim Schaltvorgang asynchron schaltbare Reibungskupplung werden dabei Primärseite und Sekundärseite, d.h. Antriebs- und Abtriebsseite der Kupplung, über Reibflächen miteinander verbunden. Da sich die Reibungszahl µ während des Rutschvorganges infolge Schmiermitteleinwirkung und Erwärmung wesentlich verändert, tritt der theoretisch zu erwartende Verlauf des Drehmoments praktisch nicht ein. Dieser dient jedoch als Grundlage zur angenäherten Berechnung von Rutschzeit und Reibarbeit. Das Rutschmoment der Kupplung wirkt als Beschleunigungsmoment und muß auch das eventuell schon wirkende Nutzmoment aufbringen. Da die beim Schaltvorgang erforderliche Reibarbeit im wesentlichen auch in Wärmeenergie umgewandelt wird und damit zur Erwärmung der Kupplung führt, und damit die Reibflächen nicht infolge der sich einstellenden Temperaturen zerstört werden, sind Grenzwerte für die Dauer der Rutschzeit bei bestimmten Drehzahlen je Kupplungstyp und Größe vorgegeben. Eine zu lange Rutschzeit schlägt sich in einer erhöhten Belastung der Reibelemente nieder, was zu einer erhöhten Abnutzung zu einem erhöhten Bedarf an Antrittskraft führt. Mit der Beeinflussung des Anfangsdruckwertes erfolgt eine Beeinflussung der Zeit zur Einstellung des Regeldruckwertes und damit auch die Zeit bis zu Beginn des Synchronisiervorganges. Beim erstmaligen Betrieb werden dabei vorzugsweise für die ersten Schaltungen ca. doppelt so viele Druckkorrekturwerte verwendet. Dies gewährleistet eine rasche Anpassung der Schaltdruckverläufe an das Fahrzeug und die Fahrbedingungen. Die Korrekturwerte selbst können dabei im RAM (flüchtiger Speicher) oder bei größeren Abweichungen vom aktuell gespeicherten Wert auch im EEPROM (nicht flüchtiger Speicher) gespeichert werden. Dies bedeutet, daß auch nach dem Ausschalten der Zündung die letzten Druckkorrekturwerte erhalten bleiben. Des weiteren besteht die Möglichkeit, bei Fehlern in der Sensorik, z.B. im Drehzahlsensor oder Lastgeber, die Adaption zu sperren. Die Schaltung kann dann mit den im EEPROM abgelegten Steuerdruckkennfeldern durchgeführt werden. Die hier erläuterte Möglichkeit der Adaption der Anfangsdruckwerte ist eine ausgewählte. Andere Möglichkeiten zur Adaption des Anfangsdruckwertes sind ebenfalls denkbar.

Die erfindungsgemäße Lösung wird nachfolgend anhand von Figuren erläutert. Darin ist im einzelnen folgendes dargestellt:
Fig. 1a bis 1c verdeutlichen anhand eines Beispieles für eine Rückschaltung in Kennlinien die tatsächlichen Verläufe der zu synchronisierenden Drehzahl auf der Antriebsseite und des Steuerdruckes bei Anwendung der erfindungsgemäßen Regelung und in strichpunktierter Darstellung den möglichen Verlauf der zu synchronisierenden Drehzahl auf der Antriebsseite und des Steuerdruckes entsprechend dem Stand der Technik;
Fig. 2a und 2b verdeutlichen schematisch Möglichkeiten der vorrichtungsmäßigen Umsetzung.

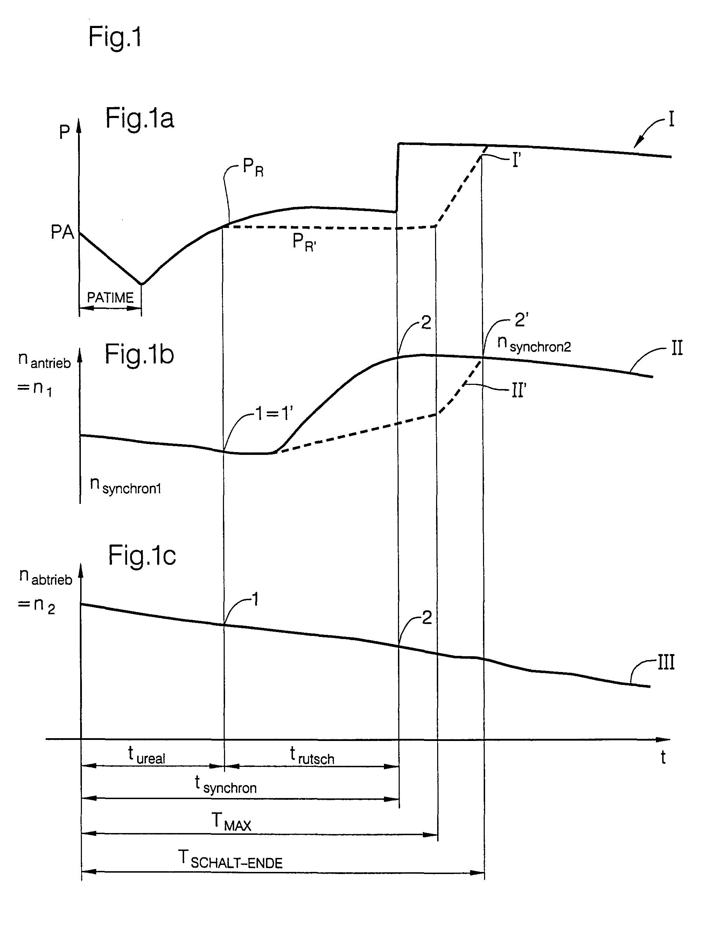

Die Figuren 1a bis 1c verdeutlichen einander gegenüberstellend das Schaltverhalten anhand ausgewählter, die Schaltung charakterisierende Kennlinien. Im einzelnen sind dies eine Steuerdruckkennlinie I, eine Kennlinie II des Verlaufes der auf der Antriebsseite anliegenden und zu synchronisierenden Drehzahl n₁ und eine Kennlinie III, in welcher der Verlauf der Abtriebsdrehzahl n₂ dargestellt ist. Steuerdruck, zu synchronisierende Drehzahl und Antriebsdrehzahl sind jeweils über die Zeit aufgetragen. Zur Verdeutlichung des Schaltverhaltens und der einzelnen Kennlinienverläufe sind diese untereinander angeordnet.

Die einzelnen dargestellten Werte sind wie folgt bezeichnet:

| | |
|---|---|
| Pₘₐₓ bzw. USTELLMAX | = maximaler Betriebsdruck |
| PR | = berechneter Regeldruck |
| PA | = Anfangsdruckert |
| PATIME | = Zeit, in welcher der Anfangsdruckwert auf den Regeldruckwert ansteigt oder abfällt |
| TMAX | = Zeit, nach der Sicherheitsdruckhochlauf beginnt und nach deren Ablauf der Synchronisiervorgang abgeschlossen sein sollte |
| TSCHALT-ENDE | = Zeit, nach der Betriebsdruck anlegt. |

Für den Schaltvorgang sind des weiteren folgende Meß- und Regelgrößen wesentlich:

| | |
|---|---|
| n_{SYNCHRON 1} | = Antriebsdrehzahl, in der Regel Motordrehzahl bei Beginn des Schaltvorganges |
| n_{SYNCHRON 2} | = Antriebsdrehzahl, in der Regel Motordrehzahl nach Beendigung des Schaltvorganges |
| n₁ | = Antriebsdrehzahl, in der Regel Motordrehzahl |
| n₂ | = die auf der Abtriebsseite zu synchronisierende Drehzahl; |
| t_{UREAL} | = Zeit bis zu Beginn des Synchronisiervorganges |
| t_{RUTSCH} | = Rutschzeit der Lamellen |
| t_{SYNCHRON} | = Zeit, nach der Schaltvorgang abgeschlossen wurde. |

Aus den Figuren 1a bis 1c sind auch schematisch die bei einer konventionellen adaptiven Beeinflussung einer Rückschaltung möglicherweise auftretenden Probleme anhand von deren Schaltkennlinien, welche hier jeweils mit I', II' und III' bezeichnet und die zur Verdeutlichung der Abweichungen gegenüber den Schaltverläufen bei der erfindungsgemäß überlagerten Regelung strichpunktiert dargestellt sind, ersichtlich. Im Einzelnen sind dazu der Steuerdruckverlauf p in ein, die zu synchronisierende Drehzahl - die Eingangsdrehzahl oder bezogen auf die Kraftübertragung im Antriebsstrang die Antriebsdrehzahl n₁ und die Ausgangsdrehzahl, d.h. die Abtriebsdrehzahl n₂ über der Zeit t in einem Diagramm aufgetragen. Unter Antriebsdrehzahl n₁ wird dabei nachfolgend die Drehzahl am Getriebeeingang, welche entweder direkt der Motordrehzahl entspricht oder eine der Motordrehzahl proportionale Drehzahl verstanden. Diese Drehzahl kann daher auch als Eingangsdrehzahl bezeichnet werden.

Dem Diagramm in den Figuren 1b und 1c ist zu entnehmen, daß nach dem Auftreten eines Gangschaltsignales, in der Zeitachse zum Zeitpunkt 0 die Motordrehzahl bzw. die Antriebsdrehzahl n1 noch bis zum Erreichen eines Freilaufpunktes, hier dem Punkt 1' für die nur rein adaptive Beeinflussung, worunter man den Punkt versteht, an dem die dem neuen Gang zugeordneten Reibelemente das volle Moment übernehmen und die dem alten Gang zugeordneten Reibelemente lösen, im wesentlichen unverändert bleibt. Ab diesem Freilaufpunkt beginnt die Motordrehzahl n1 anzusteigen während gleichzeitig die Reibelemente schleifen. Die Zeit bis zum Erreichen dieses Freilaufpunktes, der dem Beginn des Synchronisationsvorganges entspricht, ist mit t_{UREAL} bezeichnet. An diese schließt sich die Rutschzeit der Reibelemente t_{RUTSCH} an. Im Punkt 2' im Diagramm laufen beide Reibelemente synchron, der neue Gang ist eingelegt, die Reibelemente haften.

Der einzuhaltende Sollwert für den Schaltvorgang ist bei einer sogenannten Regeldruckwertadaption beispielsweise die Rutschzeit t_{RUTSCH}, die Zeit bis zur Beendigung des Schaltvorganges t_{SYNCHRON} und/oder die Zeit, nach der Betriebsdruck anliegt TSCHALT-ENDE. Die Stellgröße zur Beeinflussung dieses Zeitraumes ist der Regeldruckwert PR. Zur Durchführung einer adaptiven Regelung werden die Sollwerte für die einzelnen Zeiten in einem Last/Drehzahlkennfeld abgelegt. Dabei kann prinzipiell die Rasterung für die Last- und Drehzahlklassen beliebig gewählt werden, wobei die Sollwerte in einem Festwertspeicher in einer elektronischen Getriebesteuer- und Regel einheit gespeichert werden können. Des weiteren sind Meßeinrichtungen vorgesehen, welche die aktuelle Zeit bei jedem Schaltvorgang bis zu Beginn des Synchronisationsvorganges ermitteln. Als weitere Einflußparameter werden das Drehmoment je Lastgeberstellung, die Drehzahl beim Schalten sowie das Massenträgheitsmoment der einzelnen Komponenten berücksichtigt. Weicht der berechnete Istwert vom Sollwert ab, wird ein Korrekturwert am Ausgang der Steuereinrichtung ausgegeben und an der Druckeinheit wirksam. Die Stellgröße PR ändert sich um den Korrekturwert. Der geänderte Regeldruckwert wird abgespeichert und ist Ausgangsgröße bei einer erneuten Schaltung. Andere Konzepte der Adaption des Regeldruckwertes sind ebenfalls denkbar. Beispielsweise kann auch der Korrekturwert ein fest vorgegebener sein, der fest abgespeichert oder aber als Mittelwert einer Vielzahl von Abweichungen festgelegt wird. Des weiteren besteht die Möglichkeit der ständigen Berechnung.

Der einzuhaltende Sollwert für den Schaltvorgang ist bei einer sogenannten Anfangsdruckwertadaption vorzugsweise die Zeit bis zum Beginn des Synchronisationsvorganges t_{UREAL}. Andere Zeiträume sind ebenfalls denkbar. Das Stellglied bzw. die Stellgröße zur Beeinflussung dieses Zeitraumes ist der Anfangsdruckwert PA. Zur Durchführung einer adaptiven Regelung werden die Sollwerte für die Zeit bis zum Beginn des Synchronisationsvorganges t_{UREAL} beispielsweise in einem Last/Drehzahlkennfeld abgelegt. Dabei kann prinzipiell die Rasterung für die Last- und Drehzahlklassen beliebig gewählt werden, wobei die Sollwerte in einem Festwertspeicher in einer elektronischen Getriebesteuereinheit gespeichert werden können. Des weiteren sind Meßeinrichtungen vorgesehen, welche die aktuelle Zeit bei jedem Schaltvorgang bis zu Beginn des Synchronisationsvorganges ermitteln. Als weitere Einflußparameter werden das Drehmoment je Lastgeberstellung, die Drehzahl beim Schalten sowie das Massenträgheitsmoment der einzelnen Komponenten und die Getriebetemperatur berücksichtigt. Weicht der ermittelte Istwert vom Sollwert ab, wird ein Korrekturwert am Ausgang der Steuereinrichtung ausgegeben und an der Druckeinheit wirksam. Die Stellgröße PA ändert sich um den Korrekturwert. Der geänderte Anfangsdruckwert wird abgespeichert. Der Korrekturwert kann dabei beispielsweise ein festgelegter unveränderlicher Wert, ein aus den Abweichungen mehrerer Schaltvorgänge gebildeter bzw. zu bildender Mittelwert oder ein für jeden einzelnen Schaltvorgang oder ausgewählte Schaltvorgänge berechneter Wert sein. Eine Vielzahl von Möglichkeiten ist denkbar, welche im Ermessen des Fachmannes liegen, weshalb alle im einzelnen nicht genannt und erläutert zu werden brauchen.

Des weiteren besteht die Möglichkeit, die Schaltkonzeption dahingehend zu gestalten, daß neben dem Anfangsdruckwert auch der Regeldruck adaptiert und damit die mögliche Rutschzeit beeinflußt werden kann. In diesem Fall kann festgelegt werden, daß die Anfangsdruckwertadaption Vorrang vor der Regeldruckwertadaption besitzt. Eine andere Zuordnung der Wertigkeiten zwischen Anfangs- und Regeldruckwertadaption ist ebenfalls denkbar. Eine Änderung der Stellgrößen um einen festen Korrekturwert ist additativ oder multiplikativ möglich.

Andere Konzepte der Anpassung der Zeit bis zum Beginn des Synchronisationsvorganges durch Änderung des Anfangsdruckwertes sind ebenfalls denkbar.

In den Figuren 1a und 1b ist dabei strichpunktiert dargestellt, daß trotz erfolgter Adaption der Steuerdruckschaltkennlinien, die theoretisch ein optimiertes Schaltverhalten kennzeichnen sollen, durch äußere Einflüsse außerhalb des Adaptionskonzeptes Abweichungen bezüglich des gewünschten Verlaufes der Kennlinie II' für die zu synchronisierende Drehzahl n₁ auf der Antriebsseite auftreten. Insbesondere handelt es sich dabei um ein Abweichen von der gewünschten Beschleunigung der zu synchronisierenden Drehzahl. Dies hat zur Folge, daß die Antriebsdrehzahl n₁ beim Schalten wesentlich langsamer an die sich im wesentlichen nicht ändernde Abtriebsdrehzahl n₂ angepaßt und mit dieser synchronisiert wird. Das hat ein schlechteres Schaltverhalten zur Folge, im einzelnen verlängert sich die Schaltzeit. Insbesondere führt das Hochziehen der Antriebsdrehzahl, d.h. der zu synchronisierenden Drehzahl n₁ auf die Abtriebsdrehzahl n₂ im Zeitbereich zwischen T_{MAX} und T_{schalt-Ende} zu unerwünschten Schaltstößen, welche als Stöße im Fahrzeug registriert werden. Eine weitere Korrektur durch adaptive Maßnahmen ist dann nicht sinnvoll, da die adaptiv festgelegten Sollschaltkennlinien eine Änderung erhalten würden, die theoretisch ein schlechteres Schaltverhalten als vor Änderung der Kennlinien bedingen würde.

Zur Vermeidung dieses zeitweise auftretenden Effektes ist daher Erfindungsgemäß eine Regelung vorgesehen. Diese wird aktiv, wenn die Adaption keinen optimalen Schaltungsverlauf gewährleistet. Die Regelung kontrolliert das Verhalten der zu synchronisierenden Drehzahl n₁ auf der Antriebsseite. Fällt die zu synchronisierende Drehzahl n₁ in einer Weise ab, daß sie nicht in der gewünschten Weise gegenüber der Abtriebsdrehzahl n₂ steigt, d.h. weicht die Beschleunigung dieser Drehzahl um einen gewissen Wert ab, wird die Regelung aktiviert. Der früheste Zeitpunkt der Aktivierung der Regelung ist der Beginn des Rutschens der Reibelemente, jedoch immer eine Zeit > t_{UREAL}.

Die Regelung verarbeitet im wesentlichen wenigstens zwei Größen - einen aktuellen Istwert einer die Beschleunigung der Antriebsdrehzahl wenigstens mittelbar charakterisierende Größe und einen Sollwert dieser Größe, welche vorzugsweise die Antriebsdrehzahl selbst ist, wobei Beschleunigung über die Zeit aus den erfaßten Drehzahlen ermittelt werden kann. Ausgangsgröße der Regelung ist eine Änderung des die Lamellen der Kupplung beaufschlagenden Steuerdruckes. Als Stellglied fungiert beispielsweise eine Steuerdruckerzeugungseinheit. Innerhalb der Regelstrecke erfolgt ein ständiger Vergleich der aktuell ermittelten Istbeschleunigung der Antriebsdrehzahl mit einem theoretisch bei entsprechendem Steuerdruckverlauf ermittelten Antriebsdrehzahlverlauf. Bei Abweichung wird ein Stellsignal zur Steuerdruckbeeinflussung, insbesondere Erhöhung ausgegeben. Vorzugsweise erfolgt diese Erhöhung um einen festleg- und vorgebbaren oder ermittelten Erhöhungswert. Die Figur 1b verdeutlicht den Einfluß der Regelung auf den tatsächlichen Verlauf der zu synchronisierenden Drehzahl in der Kennlinie II. Hieraus ist ersichtlich, daß ein gegenüber dem Stand der Technik (Kennlinie II') steilerer Anstieg der Beschleunigung erzielt wird und die zu synchronisierende Drehzahl die Synchrondrehzahl weitaus früher erreicht (Punkt 2) und damit die Synchronzeit verkürzt wird.

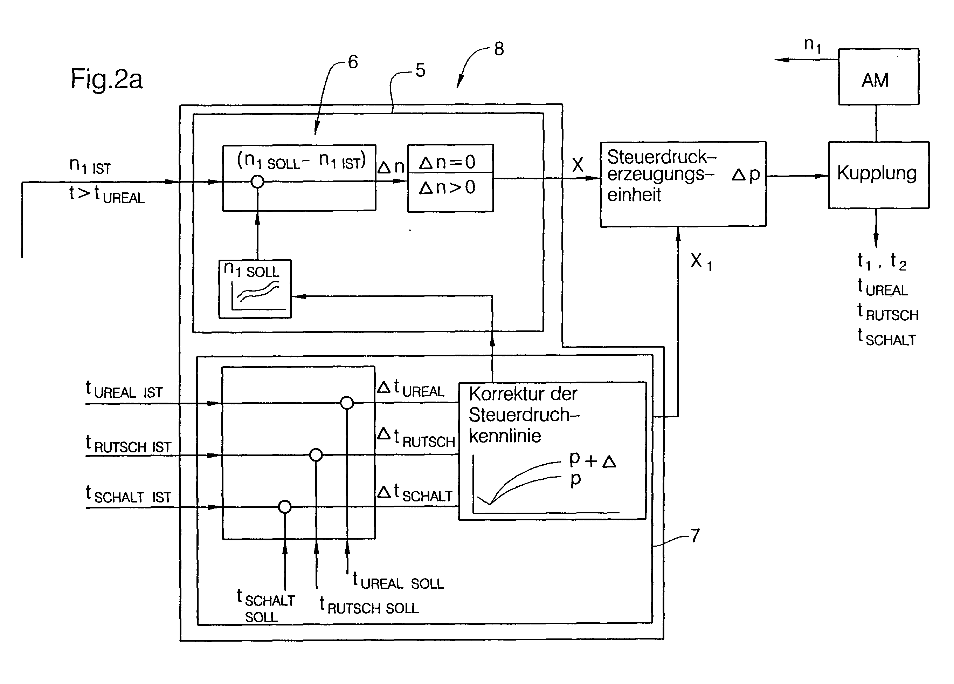

Vorrichtungsmäßig weist die dem Getriebe zugeordnete Steuervorrichtung, wie in Figur 2a dargestellt, eine Regeleinrichtung, vorzugsweise in Form einer elektronischen Steuer- und Regeleinrichtung 5 auf. Diese weist wenigstens einen Eingang auf, welcher mit einer Erfassungseinrichtung zur Erfassung der Istdrehzahl n_{1IST} gekoppelt ist. Die Erfassung der Istdrehzahl erfolgt dabei wenigstens zu einem Zeitpunkt t>t_{UREAL}. In die Regeleinrichtung ist ein Vergleicher 6 integriert. Der Vergleicher kann durch in der Steuer- und Regeleinheit ablaufende Routinen realisiert werden. Vom Vergleicher werden beispielsweise dort abgelegte Sollwerte n_{1SOLL} in Form von Kennlinien für theoretische Antriebsdrehzahlverläufe während eines Schaltvorganges mit den tatsächlichen verglichen. Der Vergleich kann sich auch auf einen vorgebbaren Sollwertbereich erstrecken.
Bei Abweichung wird, d.h. delta n, wird der Steuerdruck beispielsweise um einen festleg- und vorgebbaren Wert geändert. Bei diesem Wert kann es sich um eine feste Größe handeln, es besteht theoretisch auch die Möglichkeit diesen Korrekturwert zu berechnen. Entsprechend dem Korrekturwert delta p wird eine Stellgröße X zur Ansteuerung der Steuerdruckerzeugungseinheit am Ausgang der Steuer- bzw. Regeleinrichtung ausgegeben. Die Änderung der Größe des Steuerdruckes zur Betätigung der Kupplung beeinflußt die Antriebsdrehzahl n₁ der Antriebsmaschine AM bzw. den Kennlinienverlauf II entsprechend Figur 1 b.

Die Regeleinrichtung kann beispielsweise auch Bestandteil einer zentralen Steuer- und Regelvorrichtung 8 sein, welche dem Getriebe zugeordnet ist und eine Steuer- bzw. Regeleinrichtung 7 für die Druckwertadaption mitumfaßt. Die Steuer- bzw. Regeleinrichtung 7 umfaßt dabei wenigstens einen Eingang zur Erfassung wenigstens einer, den Schaltvorgang charakterisierenden Größe. Diese Größe kann beispielsweise t_{UREAL} oder t_{RUTSCH} oder t_{SCHALTIST} sein. Es können aber auch mehrere dieser Größen parallel erfaßt werden. Zur Beeinflussung dieser Zeiträume erfolgt dann eine adaptive Änderung des Steuerdruckes - des Anfangssteuerdruckes und/oder des Regeldruckes. Dazu wird eine Stellgröße X1 zur Ansteuerung der Steuerdruckererzeugungseinheit ausgegeben. In diesem Fall kann die Kennlinie für den theoretischen Verlauf der zu synchronisierenden Drehzahl abhängig von den adaptierten Steuerdruckverläufen ständig neu aktualisiert werden.

Baulich sind dann die verwendeten Steuer- und Regeleinrichtungen vorzugsweise die gleichen.

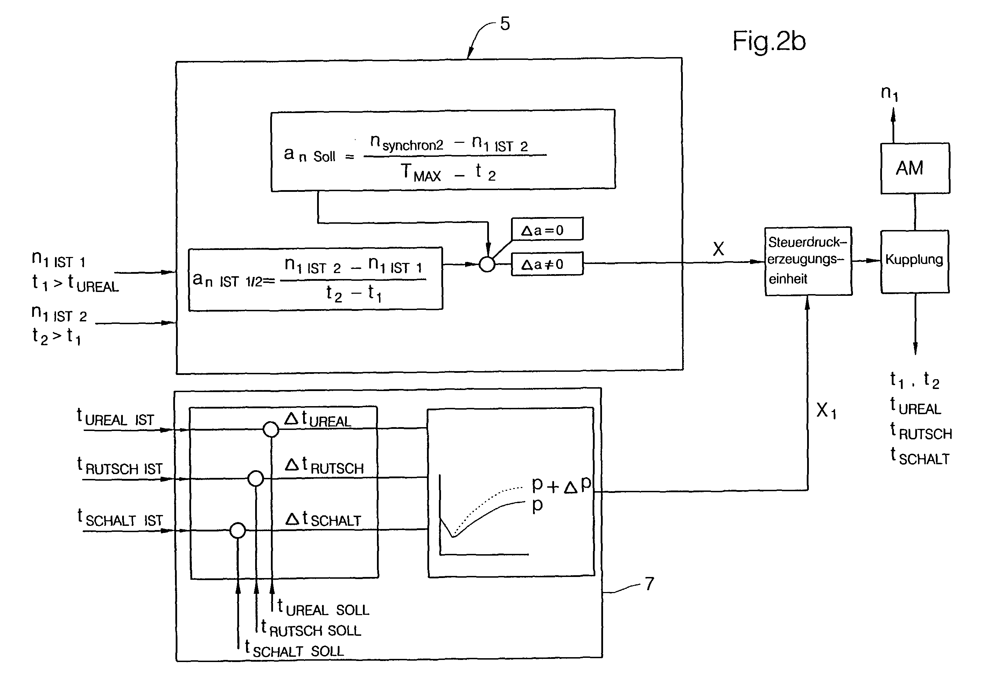

Eine andere, in Figur 2b dargestellte Möglichkeit beinhaltet die Berechnung der Antriebsdrehzahlverläufe. Dazu kann die erforderliche Sollantriebsdrehzahl bzw. deren Verlauf direkt berechnet werden oder aber, wie in der Figur 2b dargestellt, die Sollbeschleunigung a_{nSOLL}. Auch dazu ist eine Steuer- bzw. Regeleinrichtung 5 vorgesehen. Diese weist wenigstens einen Eingang zur Erfassung der Istdrehzahlen zu unterschiedlichen Zeitpunkten t₁>t_{UREAL}, t₂>t₁ auf. Aus diesen wird dann die Istbeschleunigung der Antriebsdrehzahl a_{nist 1/2} ermittelt. Des weiteren wird in Abhängigkeit von den erfaßten Drehzahlen die Sollbeschleunigung aₙₛₒₗₗ ermittelt. Beide Größen werden miteinander verglichen, wobei bei Abweichung eine Stellgröße X zur Ansteuerung der Steuerdruckerzeugungseinheit ausgegeben wird. Der Steuerdruck wird dabei um einen bestimmten Wert delta p erhöht. Dieser Erhöhungswert kann fest vorgegeben oder veränderlich sein. Der Stellgröße X kann dazu ein fester Wert zugeordnet sein, oder er kann entsprechend der Größe einer gewünschten Druckerhöhung immer wieder erneut berechnet werden. Auch in diesem Fall kann die Steuer- und Regeleinrichtung 5 mit der Steuer-bzw. Regeleinrichtung 7 zur adaptiven Beeinflussung der Steuerdruckverläufe in einer zentralen Steuer- und Regeleinheit zusammengefaßt sein. In diesem Fall werden die Funktionen der Adaption und der dieser überlagerten Regelung von ein und den selben Steuer- bzw. Regelgeräten übernommen.

Eine Integration der Steuer- bzw. Regeleinrichtung in die zentrale Fahrzeugsteuerung ist möglich.

## Patentansprüche

1. Verfahren zur Steuerung eines Schaltvorganges eines Fahrzeuggetriebes mit elektrohydraulisch betätigbaren Reibelementen zur Umschaltung zwischen verschiedenen Übersetzungsstufen, in einem Fahrzeug mit mindestens einer Antriebsmaschine bei welchem
1.1 ein aktueller Istwert wenigstens einer den Schaltvorgang charakterisierenden Größe bei jedem Schaltvorgang ermittelt wird;
1.2 der Istwert mit einem festlegbaren und/oder speicherbaren Sollwert verglichen wird;
1.3 bei Abweichung des Istwertes vom Sollwert der Steuerdruck zur elektrohydraulischen Beaufschlagung der Reibelemente zur wenigstens mittelbaren Beeinflussung der den Schaltvorgang charakterisierenden Größe um einen bestimm- berechen- oder vorgebbaren ersten Korrekturwert adaptiv zur Erzielung eines optimalen Schaltverhaltens geändert und der Verlauf der geänderten Größe jeweils als neue Kennlinie der Sollwerte abspeicherbar ist;
**gekennzeichnet durch** folgende Maßnahmen:
1.4 bei wenigstens den Schaltvorgängen, bei denen **durch** eine weitere Adaption keine befriedigende Schaltverläufe mehr gewährleistet werden können, wird wenigstens ein Istwert einer die Beschleunigung der in Kraftflußrichtung im Antriebsstrang an der Eingangsseite der Kupplung zu synchronisierenden Drehzahl - der Antriebsdrehzahl - charakterisierenden Größe oder die zu synchronisierende Drehzahl zu einem Zeitpunkt nach dem Beginn des Synchronisiervorganges ermittelt;
1.5 der Istwert der Beschleunigung der zu synchronisierenden Drehzahl oder einer, die Beschleunigung der zu synchronisierenden Drehzahl wenigstens mittelbar charakterisierenden Größe oder der zu synchronisierenden Drehzahl wird mit einem Sollwert verglichen;
1.6 bei Abweichung des Istwertes vom Sollwert wird der Steuerdruck um einen zweiten Korrekturwert verändert bis der Sollwertverlauf der zu synchronisierenden Drehzahl eingestellt und im übrigen dem adaptierten Verlauf der Steuerdruckkennlinie mit höheren Drücken nachgebildet wird.

2. Verfahren nach Anspruch 1, **dadurch gekennzeichnet, daß** der Sollwert der zu synchronisierenden Drehzahl im Zeitpunkt der Ermittlung der Abweichung berechnet wird.

3. Verfahren nach Anspruch 1, **dadurch gekennzeichnet, daß** die Sollwerte der zu synchronisierenden Drehzahl für bestimmte Steuerdruckverläufe in Kennlinien abgelegt sind.

4. Verfahren nach Anspruch 1, **dadurch gekennzeichnet, daß** die Sollwerte der zu synchronisierenden Drehzahl für bestimmte Steuerdruckverläufe in einer Tabelle abgelegt sind.

5. Verfahren nach einem der Ansprüche 3 oder 4, **dadurch gekennzeichnet, daß** die Sollwerte der zu synchronisierenden Drehzahl nach jeder erfolgten Adaption neu bestimmt werden.

6. Verfahren nach einem der Ansprüche 1 bis 5, **dadurch gekennzeichnet, daß** der zweite Korrekturwert vorgebbar und in seiner Größe unveränderlich ist.

7. Verfahren nach einem der Ansprüche 1 bis 5, **dadurch gekennzeichnet, daß** der zweite Korrekturwert fortlaufend als Funktion der Abweichung von Ist- und Sollwert und der Sollwerte berechnet wird.

8. Verfahren nach einem der Ansprüche 1 bis 7, **gekennzeichnet durch** die folgenden Maßnahmen :
8.1 bei jedem Schaltvorgang wird wenigstens eine der nachfolgend genannten, den Schaltvorgang charakterisierenden Größen
- die Zeitdauer des Rutschens der Lamellen
- die Zeitdauer vom Beginn des Synchronisiervorganges bis zum Ende
- die Zeitdauer bis zum Ende des Schaltvorganges
- die Zeitdauer vom Beginn des Schaltvorganges bis zum Zeitpunkt des Beginns des Sicherheitsdruckhochlaufes
als eine erster Istwert und/oder die Änderung der Antriebsdrehzahl während dieser Zeitdauer als ein zweiter Istwert der den Schaltvorgang charakterisierenden Größe ermittelt;
8.2 bei Abweichung der Istwerte von den vorgegebenen Sollwerten oder bei Nichterreichen der vorgegebenen Antriebsdrehzahländerung wird der Regel-Steuerdruckwert adaptiert.

9. Verfahren nach einem der Ansprüche 1 bis 8, **gekennzeichnet durch** folgende Maßnahmen :
9.1 bei jedem Schaltvorgang wird die Zeitdauer vom Abgegeben eines Gangschaltsignales bis zum Beginn des Synchronisationsvorganges oder/und die Änderung der Antriebsdrehzahl während dieser Zeitdauer als ein erster und/oder zweiter Istwert der den Schaltvorgang charakterisierenden Größe ermittelt werden;
9.2 bei Abweichung der Zeitdauer bis zum Beginn des Synchronisiervorganges vom vorgegeben Sollzeitraum oder bei Nichterreichen der vorgegebenen Antriebsdrehzahländerung nach einem Schaltvorgang wird der Anfangs- Steuerdruckwert zum Aufbringen der erforderlichen Anpreßkraft der kraftschlüssig miteinander koppelbaren Kupplungsteile adaptiert.

10. Verfahren nach Anspruch 9, **dadurch gekennzeichnet, daß** die Adaption des Regel-Steuerdruckwertes Vorrang vor der Adaption des Anfangs-Steuerdruckwertes besitzt.

11. Verfahren nach Anspruch 9, **dadurch gekennzeichnet, daß** die Adaption des Anfangs-Steuerdruckwertes Vorrang vor der Regel-Steuerdruckwertadaption besitzt.

12. Verfahren nach einem der Ansprüche 8 bis 11, **dadurch gekennzeichnet, daß** der Anfangs-Steuerdruckwert oder der Regel-Steuerdruck sukzesive um den ersten Korrekturwert verändert wird.

13. Verfahren nach einem der Ansprüche 8 oder 12, **dadurch gekennzeichnet, daß** die Änderung des Anfangs-Steuerdruckwertes und/oder des Regel-Steuerdruckwertes jeweils um einen festen ersten Korrekturwert erfolgt und der damit sich neu einstellende Anfangs- bzw. Regel-Steuerdruckwert für gleiche Randbedingungen gespeichert wird.

14. Verfahren nach einem der Ansprüche 8 bis 13, **dadurch gekennzeichnet, daß** der erste Korrekturwert für die Änderung des Anfangs- oder Regel-Steuerdruckes bei jedem Schaltvorgang berechnet werden.

15. Verfahren nach Anspruch 14, **dadurch gekennzeichnet, daß** über eine Mehrzahl von Schaltvorgängen der erste Korrekturwert ermittelt wird und dessen Mittelwert jeweils wenigstens kurzzeitig als fester Korrekturwert gespeichert wird.

16. Steuervorrichtung (8) für ein Fahrzeuggetriebe mit wenigstens einer Einrichtung zum Aufbringen der zum Betätigen und Aneinanderpressen von Reibelementen zur Umschaltung zwischen verschiedenen Übersetzungsstufen für ein Fahrzeug mit mindestens einer Antriebsmaschine erforderlichen Kraft mittels einem Druckmittel;
16.1 es ist eine Steuereinrichtung (7) mit wenigstens einem ersten Eingang und einem ersten Ausgang vorgesehen;
16.2 es ist wenigstens eine Erfassungseinrichtung für die Ermittlung eines Istwertes einer den Schaltvorgang wenigstens mittelbar charakterisierenden Größe bei jedem Schaltvorgang vorgesehen, welche mit dem Eingang der Steuervorrichtung (8) koppelbar ist;
16.3 das Stellglied der Steuereinrichtung (7) wird von der Einrichtung zur Erzeugung der Anpreßkraft gebildet und ist mit dem Ausgang der Steuereinrichtung (7) koppelbar;
16.4 die Steuereinrichtung (7) umfaßt mindestens eine Vergleichseinrichtung (6) zum Vergleich des Istwertes mit einem festlegbaren und gespeicherten Sollwert;
16.5 die Steuereinrichtung (7) umfaßt eine Einrichtung zur Änderung einer Stellgröße bei Abweichung des Istwertes vom Sollwert zur wenigstens mittelbaren Beeinflussung um einen festlegbaren Korrekturwert;
16.6 die Steuereinrichtung (7) umfaßt eine Speichereinrichtung zur Abspeicherung der um den Korrekturwert geänderten Stellgröße für den zu erzielenden Sollwert;
**gekennzeichnet durch** folgende Merkmale:
16.7 es ist eine Regeleinrichtung, (5) umfassend wenigstens einen Eingang und einen Ausgang vorgesehen;
16.8 der erste Eingang der Regeleinrichtung (5) ist mit einer Einrichtung zur Erfassung eines den Istwert der Beschleunigung der zu synchronisierenden Drehzahl oder einer, die Beschleunigung der zu synchronisierenden Drehzahl wenigstens mittelbar charakterisierenden Größe oder der zu synchronisierenden Drehzahl gekoppelt;
16.9 die Regeleinrichtung (5) umfaßt eine Einrichtung zum Vergleich des Istwertes mit einem vorgebbaren oder berechenbaren Sollwert;
16.10 der Ausgang ist mit einer Einrichtung zur Änderung einer Stellgröße bei Abweichung des Istwertes vom Sollwert zur wenigstens mittelbaren Beeinflussung um einen Korrekturwert;
16.11 die Stellgröße ist der Regel-Steuerdruck;
16.12 die Regeleinrichtung (5) ist mit der Steuereinrichtung (7) derart gekoppelt, daß diese erst bei Ausschöpfung der Möglichkeiten der Adaption **durch** die Steuereinrichtung (7) aktiviert wird.

17. Steuervorrichtung (8) nach Anspruch 16, **dadurch gekennzeichnet, daß** die Erfassungseinrichtung ein Drehzahlsensor zur Ermittlung der zu synchronisierenden Drehzahl ist.

18. Steuervorrichtung (8) nach einem der Ansprüche 16 oder 17, **dadurch gekennzeichnet, daß** die Einrichtung zur Änderung der Stellgröße der Steuereinrichtung (7) und die Einrichtung zur Änderung der Stellgröße der Regeleinrichtung (5) die Einrichtung zur Erzeugung des die Kupplung zu beaufschlagenden Steuerdruckes ist.

19. Steuervorrichtung (8) nach einem der Ansprüche 16 bis 18, **gekennzeichnet durch** die folgenden Merkmale:
19.1 die Steuereinrichtung (7) weist einen weiteren Ausgang auf, der mit einer Einrichtung zur Ermittlung der Sollwerte der Beschleunigung der zu synchronisierenden Drehzahl und/oder der zu synchronisierenden Drehzahl aus den mittels der Steuereinrichtung adaptierten Steuerdruckkennlinien gekoppelt ist;
19.2 die Einrichtung zur Ermittlung der Sollwerte ist mit dem Eingang der Regeleinrichtung (5) gekoppelt.

20. Steuervorrichtung (8) nach einem der Ansprüche 16 bis 18, **dadurch gekennzeichnet, daß** die Regeleinrichtung (5) eine Einrichtung zur Berechnung des Sollwertes einer die Beschleunigung der zu synchronisierenden Drehzahl und/oder der zu synchronisierenden Drehzahl wenigstens mittelbar charakterisierenden Größe aufweist, welche den Sollwert für jeden Schaltvorgang aktuell berechnet.

21. Steuervorrichtung (8) nach einem der Ansprüche 16 bis 20, **dadurch gekennzeichnet, daß** wesentliche Teile der Steuereinrichtung (7) und der Regeleinrichtung (5) von einer elektronischen Datenverarbeitungseinheit gebildet sind.

22. Steuervorrichtung (8) nach einem der Ansprüche 16 bis 21, **dadurch gekennzeichnet, daß** diese Bestandteil einer zentralen Fahrzeugsteuerung ist.

## Claims

1. Method for controlling a shift of a vehicle transmission with electrohydraulically operable friction elements for changing between different transmission ratios in a vehicle with at least one driving motor, wherein
1.1 upon every shift, a present actual value of at least one variable **characterizing** the shift is determined;
1.2 the actual value is compared with a definable and/or storable set value;
1.3 if the actual value deviates from the set value, the control pressure for acting electrohydraulically on the friction elements to influence at least indirectly the variable **characterizing** the shift [is] adaptively modified by a determinable computable or specifiable first correction value to obtain optimal shifting behaviour, and the curve of each [such] modified variable is storable as a new characteristic of the set values;
**characterized by** the following measures:
1.4 upon at least those shifts for which satisfactory curves can no longer be assured by further adaptation, at least one actual value of a variable **characterizing** the acceleration of the rotational speed to be synchronized on the input side of the clutch (in the direction of power flow in the drive line) i.e. of the speed of the driving motor, or the rotational speed to be synchronized, is determined at a moment subsequent to the start of the synchronizing process;
1.5 the actual value of the acceleration of the rotational speed to be synchronized, or [the actual value] of a variable at least indirectly **characterizing** the acceleration of the rotational speed to be synchronized, or [the actual value] of the rotational speed to be synchronized, is compared with a set value;
1.6 if the actual value deviates from the set value, the control pressure is modified by a second correction value until the set-value curve of the rotational speed to be synchronized is established and as for the rest replicates the adapted curve of the control-pressure characteristic, with higher pressures.

2. Method according to Claim 1, **characterized in that** the set value of the rotational speed to be synchronized is computed at the moment of determination of the deviation.

3. Method according to Claim 1, **characterized in that** the set values of the rotational speed to be synchronized for specified control-pressure curves are filed in characteristics.

4. Method according to Claim 1, **characterized in that** the set values of the rotational speed to be synchronized for specified control-pressure curves are filed in a table.

5. Method according to Claim 3 or Claim 4, **characterized in that** the set values of the rotational speed to be synchronized are determined afresh after every adaptation that is made.

6. Method according to any one of Claims 1 to 5, **characterized in that** the second correction value is specifiable and is invariable in magnitude.

7. Method according to any one of Claims 1 to 5, **characterized in that** the second correction value is continuously calculated as a function of the deviation of actual and set value and [as a function] of the set values.

8. Method according to any one of Claims 1 to 7, **characterized by** the following measures:
8.1 upon every shift, at least one of the following variables **characterizing** the shift
- the time period of the slipping of the disks
- the time period from the start of the synchronizing process to the end
- the time period until the end of the shift
- the time period from the start of the shift to the moment when the safety pressure run-up starts
is determined as a first actual value and/or the change in the driving speed during this time period is determined as a second actual value of the variable **characterizing** the shift;
8.2 the regulating control-pressure value is adapted if the actual values deviate from the specified set values or if the specified change in the driving speed is not attained.

9. Method according to any one of Claims 1 to 8, **characterized by** the following measures:
9.1 upon every shift, the time period from the [giving] of a gear shift signal to the start of the synchronization process or/and the change in the driving speed during this time period [is or] are determined as a first and/or second actual value of the variable **characterizing** the shift;
9.2 if the time period until the start of the synchronizing process deviates from the specified set time period or if after a shift the specified change in the driving speed is not attained, the initial control-pressure value for applying the necessary contact force to the frictionally engaging clutch parts is adapted.

10. Method according to Claim 9, **characterized in that** the adaptation of the regulating control-pressure value has precedence over the adaptation of the initial control-pressure value.

11. Method according to Claim 9, **characterized in that** the adaptation of the initial control-pressure value has precedence over the regulating control-pressure value adaptation.

12. Method according to any one of Claims 8 to 11, **characterized in that** the initial control-pressure value or the regulating control pressure is gradually modified by the first correction value.

13. Method according to Claim 8 or Claim 12, **characterized in that** each modification of the initial control-pressure value and/or regulating control-pressure value is by a fixed first correction value, and the initial or regulating control-pressure value thus newly established for given marginal conditions is stored.

14. Method according to any one of Claims 8 to 13, **characterized in that** the first correction value for modifying the initial or regulating control pressure is calculated upon every shift.

15. Method according to Claim 14, **characterized in that** the first correction value is determined over a plurality of shifts and each mean value obtained is stored at least momentarily as a "fixed" correction value.

16. Control unit (8) for a vehicle transmission with at least one device for applying, by means of a pressure medium, the necessary force to operate and press together friction elements for changing between different transmission ratios for a vehicle with at least one driving motor;
16.1 a control device (7) with at least a first input and a first output is provided;
16.2 at least one acquisition device for determining upon every shift an actual value of a variable at least indirectly **characterizing** the shift is provided, and is connectable to the input of the control unit (8);
16.3 the final control element of the control device (7) is formed by the device for generating the pressure force, and is connectable to the output of the control device (7);
16.4 the control device (7) includes at least one comparator device (6) for comparing the actual value with a definable and stored set value;
16.5 the control device (7) includes a device for modifying a correcting variable if the actual value deviates from the set value, for at least indirect modification by a definable correction value;
16.6 the control device (7) includes a memory device for storing the correcting variable, modified by the correction value, for the set value to be obtained;
**characterized by** the following features:
16.7 a regulating device (5) having at least one input and one output is provided;
16.8 the first input of the regulating device (5) is coupled to a device for [detecting the] actual value of the acceleration of the rotational speed to be synchronized or [the actual value] of a variable at least indirectly **characterizing** the acceleration of the rotational speed to be synchronized, or [the actual value] of the rotational speed to be synchronized;
16.9 the regulating device (5) includes a device for comparing the actual value with a definable or computable set value;
16.10 the output is [coupled] to a device for modifying a correcting variable if the actual value deviates from the set value, for at least indirect modification by a correction value;
16.11 the correcting variable is the regulating control pressure;
16.12 the regulating device (5) is coupled to the control device (7) in such a way that it is not activated until the possibilities for adaptation by the control device (7) have been exhausted.

17. Control unit (8) according to Claim 16, **characterized in that** the acquisition device is a speed sensor for detecting the rotational speed to be synchronized.

18. Control unit (8) according to Claim 16 or Claim 17, **characterized in that** the device for modifying the correcting variable of the control device (7), and the device for modifying the correcting variable of the regulating device (5), is the device for generating the control pressure to act on the clutch.

19. Control unit (8) according to any one of Claims 16 to 18, **characterized by** the following features:
19.1 the control device (7) has a further output which is coupled to a device for determining the set values of the acceleration of the rotational speed to be synchronized and/or [the set values] of the rotational speed to be synchronized, from the control-pressure characteristics adapted by means of the control device;
19.2 the device for determining the set values is coupled to the input of the regulating device (5).

20. Control unit (8) according to any one of Claims 16 to 18, **characterized in that** the regulating device (5) has a device for calculating the set value of a variable at least indirectly **characterizing** the acceleration of the rotational speed to be synchronized and/or of the rotational speed to be synchronized *[sic],* which calculates in real time the set value for each shift.

21. Control unit (8) according to any one of Claims 16 to 20, **characterized in that** major elements of the control device (7) and regulating device (5) are formed by an electronic data processing unit.

22. Control unit (8) according to any one of Claims 16 to 21, **characterized in that** it forms part of a central vehicle control.

## Revendications

1. Procédé de commande d'un processus de changement de vitesse dans une transmission de véhicule au moyen d'éléments à friction pouvant être actionnés de manière électro-hydraulique, destinés à la commutation entre différents rapports de transmission dans un véhicule comportant au moins une machine-menante, procédé dans lequel
1.1 à chaque changement de vitesse, il est déterminé au moins une valeur réelle actuelle d'une grandeur caractérisant le changement de vitesse ;
1.2 la valeur réelle est comparée à une valeur de consigne pouvant être définie et/ou mise en mémoire ;
1.3 en cas d'écart entre la valeur réelle et la valeur de consigne, la pression de commande pour l'alimentation électro-hydraulique des éléments à friction destinée à influer au moins indirectement sur la grandeur caractérisant le changement de vitesse, est modifiée d'une première valeur de correction pouvant être déterminée, calculée ou prédéfinie, et adaptée pour atteindre un comportement optimal de changement de vitesse et l'allure de la grandeur modifiée peut être chaque fois stockée en mémoire en tant que nouvelle caractéristique des valeurs de consigne ;
**caractérisé par** les dispositions suivantes :
1.4 il est déterminé au moins une valeur réelle d'une grandeur caractérisant l'accélération du nombre de tours, - nombre de tours d'entraînement - à synchroniser du côté entrée de l'accouplement dans le sens du flux des forces dans la ligne de transmission, ou le nombre de tours à synchroniser à un moment postérieur au début du processus de synchronisation, au moins pour les processus de changement de vitesse où aucun déroulement satisfaisant du changement de vitesse ne peut plus être assuré par une nouvelle adaptation ;
1.5 la valeur réelle de l'accélération du nombre de tours à synchroniser ou celle d'une grandeur caractérisant au moins indirectement l'accélération du nombre de tours à synchroniser ou bien celle du nombre de tours à synchroniser est comparée à une valeur de consigne ;
1.6 en cas d'écart entre la valeur réelle et la valeur de consigne, la pression de commande est modifiée d'une deuxième valeur de correction jusqu'à ce que l'allure de la valeur dé consigne du nombre de tours à synchroniser soit réglée et soit par ailleurs reproduite à l'image de l'allure adaptée de la courbe caractéristique de la pression de commande avec des pressions plus élevées.

2. Procédé selon la revendication 1, **caractérisé en ce que** la valeur de consigne du nombre de tours à synchroniser est calculée au moment de la détermination de l'écart.

3. Procédé selon la revendication 1, **caractérisé en ce que** les valeurs de consigne du nombre de tours à synchroniser sont classées en courbes caractéristiques pour des allures déterminées de pression de commande.

4. Procédé selon la revendication 1, **caractérisé en ce que** les valeurs de consigne du nombre de tours à synchroniser sont classées en un tableau pour des allures déterminées de pression de commande.

5. Procédé selon l'une des revendications 3 ou 4, **caractérisé en ce que** les valeurs de consigne du nombre de tours à synchroniser sont à nouveau déterminées après chaque adaptation réussie.

6. Procédé selon l'une des revendications 1 à 5, **caractérisé en ce que** la deuxième valeur de correction peut être prédéfinie et est invariable dans sa grandeur.

7. Procédé selon l'une des revendications 1 à 5, **caractérisé en ce que** la deuxième valeur de correction est calculée en continu en tant que fonction de l'écart entre valeur réelle et valeur de consigne et en tant que fonction des valeurs de consigne.

8. Procédé selon l'une des revendications 1 à 7, **caractérisé par** les dispositions suivantes :
8.1 à chaque changement de vitesse, il est déterminé au moins une des grandeurs indiquées ci-après caractérisant le changement de vitesse :
- le temps de patinage des disques
- le temps entre le début et la fin du processus de synchronisation
- le temps écoulé jusqu'à la fin du processus de changement de vitesse
- le temps entre le début du processus de changement de vitesse et le moment où débute l'accélération à grande vitesse à la pression de sécurité
en tant que première valeur réelle et/ou la modification du nombre de tours d'entraînement pendant ce temps en tant que deuxième valeur réelle de la grandeur caractérisant le changement de vitesse ;
8.2 en cas d'écarts entre les valeurs réelles et les valeurs de consigne prédéfinies ou bien en cas de non-obtention de la modification prédéfinie du nombre de tours d'entraînement, la valeur de la pression réglée de commande est adaptée.

9. Procédé selon l'une des revendications 1 à 8, **caractérisé par** les dispositions suivantes :
9.1 à chaque changement de vitesse, le temps entre la délivrance d'un signal de changement de vitesse et le début du processus de synchronisation et/ou la modification du nombre de tours d'entraînement pendant ce laps de temps est déterminé en tant que première et/ou deuxième valeur réelle de la grandeur caractérisant le processus de changement de vitesse ;
9.2 en cas d'un écart entre le temps jusqu'au début du processus de synchronisation et l'intervalle de temps de consigne prédéfini ou en cas de non-obtention de la modification du nombre de tours d'entraînement prédéfini, après un changement de vitesse, la valeur de la pression de commande initiale est adaptée pour la production de la force de pression nécessaire entre éléments d'accouplement aptes à être mutuellement couplés par adhérence.

10. Procédé selon la revendication 9, **caractérisé en ce que** l'adaptation de la valeur réglée de la pression de commande a priorité sur l'adaptation de la valeur de la pression de commande initiale.

11. Procédé selon la revendication 9, **caractérisé en ce que** l'adaptation de la valeur de pression de commande initiale a priorité sur l'adaptation de la valeur réglée de la pression de commande.

12. Procédé selon l'une des revendications 8 à 11, **caractérisé en ce que** la valeur de la pression de commande ou la pression réglée de commande sont modifiées successivement de la première valeur de correction.

13. Procédé selon l'une des revendications 8 ou 12, **caractérisé en ce que** la modification de la valeur de la pression de commande initiale et/ou celle de la valeur - de la pression de commande réglée s'effectue chaque fois avec une première valeur de correction fixe et la valeur de la pression de commande initiale ou réglée ainsi nouvellement établie est stockée en mémoire pour des conditions limites inchangées.

14. Procédé selon l'une des revendications 8 à 13, **caractérisé en ce que** la première valeur de correction pour la modification de la pression de commande initiale ou réglée, est calculée à chaque changement de vitesse.

15. Procédé selon la revendication 14, **caractérisé en ce qu'**on détermine la première valeur de correction par une pluralité de processus de changement de vitesse et la valeur moyenne est chaque fois stockée en mémoire en tant que valeur de correction fixe au moins temporairement.

16. Système de commande (8) pour une transmission de véhicule, comportant au moins un dispositif destiné à produire, par le biais d'un moyen de pression, la force nécessaire pour actionner et presser entre eux des éléments à friction destinés à la commutation entre différents rapports de transmission pour un véhicule comportant au moins une machine menante ;
16.1 il est prévu un dispositif de commande (7) avec au moins une première entrée et une première sortie ;
16.2 il est prévu au moins un dispositif de détection pour la détermination d'une valeur réelle d'une grandeur caractérisant au moins indirectement le processus de changement de vitesse à chaque changement de vitesse , lequel dispositif peut être couplé avec l'entrée du système de commande (8) ;
16.3 le composant de réglage du dispositif de commande (7) est formé par le dispositif de production de la force de pression et peut être couplé avec la sortie du dispositif de commande (7) ;
16.4 le dispositif de commande (7) comprend au moins un dispositif de comparaison (6) pour comparer la valeur réelle avec une valeur de consigne pouvant être fixée et qui est en mémoire ;
16.5 le dispositif de commande (7) comprend un dispositif pour modifier une grandeur réglante en cas d'écart entre la valeur réelle et la valeur de consigne pour appliquer au moins indirectement une valeur de correction pouvant être fixée ;
16.6 le dispositif de commande (7) comprend un dispositif de mémorisation pour conserver en mémoire la grandeur réglante modifiée de la valeur de correction pour la valeur de consigne à atteindre ;
16.7 il est prévu un dispositif de réglage (5) comprenant au moins une entrée et une sortie ;
16.8 la première entrée du dispositif de réglage (5) est couplée avec un dispositif de détection d'une grandeur caractérisant la valeur réelle de l'accélération du nombre de tours à synchroniser ou d'une grandeur caractérisant l'accélération du nombre de tours à synchroniser au moins indirectement ou de la grandeur du nombre de tours à synchroniser ;
16.9 le dispositif de réglage (5) comprend un dispositif de comparaison de la valeur réelle avec une valeur de consigne pouvant être prédéfinie ou calculée ;
16.10 la sortie est couplée à un dispositif de modification d'une grandeur réglante en cas d'un écart entre la valeur réelle et la valeur de consigne pour appliquer au moins indirectement une valeur de correction ;
16.11 la grandeur réglante est la pression réglée de commande ;
16.12 le dispositif de réglage (5) est couplé au dispositif de commande (7) de telle sorte que celui-ci soit activé uniquement lorsque les possibilités d'adaptation par le dispositif de commande (7) sont épuisées.

17. Système de commande (8) selon la revendication 16, **caractérisé en ce que** le dispositif de détection est un détecteur du nombre de tours destiné à déterminer le nombre de tours à synchroniser.

18. Système de commande (8) selon l'une des revendications 16 ou 17, **caractérisé en ce que** le dispositif de modification de la grandeur réglante du dispositif de commande (7) et le dispositif de modification de la grandeur réglante du dispositif de réglage (5) forment le dispositif de production de pression de commande qui alimente l'accouplement.

19. Système de commande (8) selon l'une des revendications 16 à 18, **caractérisé par** les particularités suivantes:
19.1 le dispositif de commande (7) présente une autre sortie qui est couplée à un dispositif de détermination des valeurs de consigne de l'accélération du nombre de tours à synchroniser et/ou le nombre de tours à synchroniser à partir des courbes caractéristiques de la pression de commande adaptées au moyen du dispositif de commande ;
19.2 le dispositif de détermination des valeurs de consigne est couplé avec l'entrée du dispositif de réglage (5).

20. Système de commande (8) selon l'une des revendications 16 à 19, **caractérisé en ce que** le dispositif de réglage (5) présente un dispositif de calcul de la valeur de consigne d'une grandeur caractérisant au moins indirectement l'accélération du nombre de tours à synchroniser et/ou le nombre de tours à synchroniser, lequel dispositif calcule au moment considéré la valeur de consigne pour chaque processus de changement de vitesse.

21. Système de commande (8) selon l'une des revendications 16 à 20, **caractérisé en ce que** des parties essentielles du dispositif de commande (7) et du dispositif de réglage (5) sont constituées par une unité électronique de traitement des données.

22. Système de commande (8) selon l'une des revendications 16 à 21, **caractérisé en ce que** celui-ci est un élément constituant d'une commande centralisée de véhicule.
